# EUROPEAN PATENT APPLICATION

(11) **EP 2 372 185 A2**
(43) Date of publication of application: **05.10.2011**
(21) Application number: 11159201.0
(22) Date of filing: 22.03.2011
(51) Int. Cl.: F16F 15/14, F16F 15/22

(54) **Method and device for reducing of negative effects of dynamic forces of mechanical system**

(30) Priority: 29.03.2010 CZ 20100234
(71) Applicant: VÚTS, a.s., 461 19 Liberec (CZ)
(72) Inventor: Ondrásek, Jiri, 46005, Liberec (CZ)
(74) Representative: Musil, Dobroslav

(57) **Abstract**

The invention relates to a method for reducing the negative effects of dynamic forces of mechanical system, whose working member (22) performs reversible periodic rotation motion, the system is provided with at least one balancing sub-system (3, 4) comprising a counterbalancing body (31, 41) linked with working member (22) of mechanical system by elastic means. At the same time the counterbalancing body (31, 41) before commencement of start up of mechanical system gets immobile with respect to the frame (1), and its releases after start up of the working member (22) of mechanical system in case of reaching the required angular speed (ωₚ₁) of steady working mode of mechanical system laying in the range of speeds permissible for balancing with counterbalancing body (31, 41) in a moment, in which the working member (22) of mechanical system is to be found in a certain specified angular position (δ) with respect to the counterbalancing body (31, 41) of mechanical system. The invention also relates to the device for performance of this method.

## Description

### Technical field

The invention relates to the method for reducing the negative effects of dynamic forces of mechanical system, whose working member performs reversible periodic rotation motion, the system is provided with at least one balancing sub-system comprising a counterbalancing body linked with working member of mechanical system by elastic means.

Next to this, the invention relates to the device for reducing the negative effects of dynamic forces of mechanical system comprising the moving members coupled with at least one balancing sub-system comprising a counterbalancing body linked by elastic means with working member of mechanical system, while mechanical system with the balancing subsystem is mounted in a frame.

### Background art

At running mechanisms the dynamic forces are generated, which are specific for kinematics corresponding to the types of mechanisms and they are especially a result of distribution of masses, pliability of members of the mechanism, passive resistance and kinematic arrangement of the given mechanism. The imbalance of mechanism caused by existence of these inertial forces puts load on the running mechanism, causes its vibrations and usually increases magnitude of reaction forces transmitted into the machine frame. It increases a necessary driving moment of the whole machine, thereby required power consumption. It is obvious that the undesired effects of dynamic forces are apparent especially at mechanisms, whose members perform a periodic reversible motion.

The endeavour is to balance the dynamic forces. This is done by modifying the distribution of forces and rigidity of mechanisms and by modifying the shape of excitation function.

Further possible way is to connect any balancing oscillating subsystem. Counterbalancing body or bodies are connected to a suitable place of the mechanism being balanced by rigid or elastic means. Motion of the counterbalancing body is counter-rotating to the motion of the body being balanced.

The invention CZ 284099 B6 solves balancing of drive of the weaving machine slay, which is driven by a member of the four-joint mechanism, while the reversible oscillatory motion of the slay is generated by a rotating crankshaft driving this four-joint mechanism. In swinging axis of the slay mounted in the machine frame to the slay there is linked the torsion spring, which on the distant end is also mounted in the machine frame, while at this end a counterbalancing body is firmly attached to it. The counterbalancing body and torsion spring thus create an oscillating subsystem.

At a known above-resonance generation with respect to the inertia of the counterbalancing body and elasticity of torsion spring the swinging reversible motion of counterbalancing body is counter-rotating with respect to the swinging reversible motion of the body being balanced.

Balancing subsystems of a described type are designed to a certain nominal angular frequency, or certain nominal revolutions, at which the mechanism being balanced is balanced best. Level of balancing dependsprimarily on type of mechanism being balanced, number of connected balancing subsystems and on variation of angular displacement of the actuated driven member of the mechanism being balanced.

Next to the steady working mode of the machine there exist the transition actions, which take place during machine start up from standstill to working speed, and during machine after-run from working speed till standstill. These transition actions are very problematic from the point of view of balancing especially when these actions due to technologic reasons must be performed very rapidly in a short time interval. It is apparent that during transition actions the connected counterbalancing masses contribute to a high imbalance in a great deal.

The goal of this invention is to remedy or substantially reduce shortcomings of the background art consisting in negative effects of dynamic forces especially during a fast start up of the machine to working speed.

### Principle of the invention

The goal of the invention has been achieved by reducing the negative effects of dynamic forces of mechanical system provided with at least one balancing subsystem comprising a counterbalancing body linked with working member of mechanical system by elastic means, whose principle consists in that, the counterbalancing body before commencement of start up of mechanical system gets immobile with respect to the frame, and its releases after start up of the working member of mechanical system in case of reaching the required angular speed of steady working mode of mechanical system laying in the range of speeds permissible for balancing with counterbalancing body in a moment, in which the working member of mechanical system is to be found in a certain specified angular position with respect to counterbalancing body of mechanical system. A substantial time segment of start up period thus happens at the counterbalancing body being immobile, at the same time the energy accumulated into the elastic means connected with working member of mechanical system reduces demand as to driving moment and power requirement of mechanical system.

At operation of the device on an angular speed of a steady working modeof mechanical system laying outside the range of speeds permissible for balancing with counterbalancing body, the counterbalancing body remains immobile. At the moment of such working mode the energy accumulated into the elastic means reduces demand as to driving moment and power requirement of mechanical system.

Before the counterbalancing body gets immobile, the counterbalancing body is set into a certain angular position with respect to the working member. Through this it is possible to select the best moment for releasing the counterbalancing body with respect to instantaneous position of the working member of mechanical system and to reach an optimal reducing of negative effects of dynamic forces at start up the mechanical system also at its steady working mode and an optimal reaching of steady working mode of mechanical system with balancing of inertial effects.

Immobilisation of the counterbalancing body of balancing subsystem with respect to the stationary frame of the mechanical system, possibly its releasing from the stationary frame of the mechanical system being balanced is performed by means of a retaining device. This enables technically simple possibility of immobilisation of the counterbalancing body and exact determination of a suitable moment of its releasing utilising automatically generated pulse for this releasing. It is especially advantageous if the retaining device is controlled electrically, pneumatically, or hydraulically.

The goal of the invention has also been achieved by the device for reducing the negative effects of dynamic forces of the given mechanical system, which comprises the balancing subsystem with counterbalancing body, whose principle consists in that the counterbalancing body of balancing subsystem is attachable to the frame in a detachable manner.

This may be with advantage realised so, that the retaining device, arranged on the frame, is assigned to the counterbalancing body.

To the counterbalancing body there are further assigned means for setting mutual angular position of the counterbalancing body of balancing subsystem and working member of the mechanical system, a position sensor of working member of mechanical system and a control unit coupled with servodrive of driving member of the mechanical system being balanced, with retaining device for detachable linking of the counterbalancing body of balancing subsystem and frame, and with position sensor of working member of mechanical system.

A device according to the invention may be assembled from currently available parts, which meet the requirements for automated control. This is a prerequisite of an exact keeping the specified time sequence of start up steps to the speed of steady working mode laying in a certain range of speeds, at which the counterbalancing bodies realise a periodic reversible motion with opposite phase with respect to the working member of mechanical system, as well as utilising of possibility of steady working mode at angular speed laying outside a certain range of speeds, at which the counterbalancing bodies are got immobile with respect to the frame, and a certain portion of the driving moment and power requirement for drive of mechanical system is formed of energy accumulated into alternately deformed elastic means inserted between the immobilised counterbalancing bodies and working member of mechanical system.

### Description of the drawing

Exemplary embodiment of the device according to the invention is schematically represented on the drawing where the Fig. 1 shows a skew view to the device, the Fig. 2 kinematic scheme of the device and the Fig. 3 a graph of variation of angular displacement for individual parts of mechanical system being balanced at a time of machine start up.

### Examples of embodiment

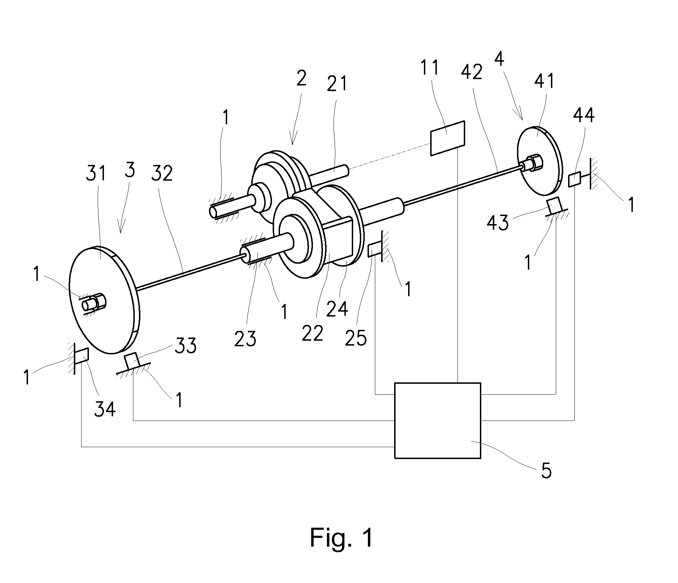

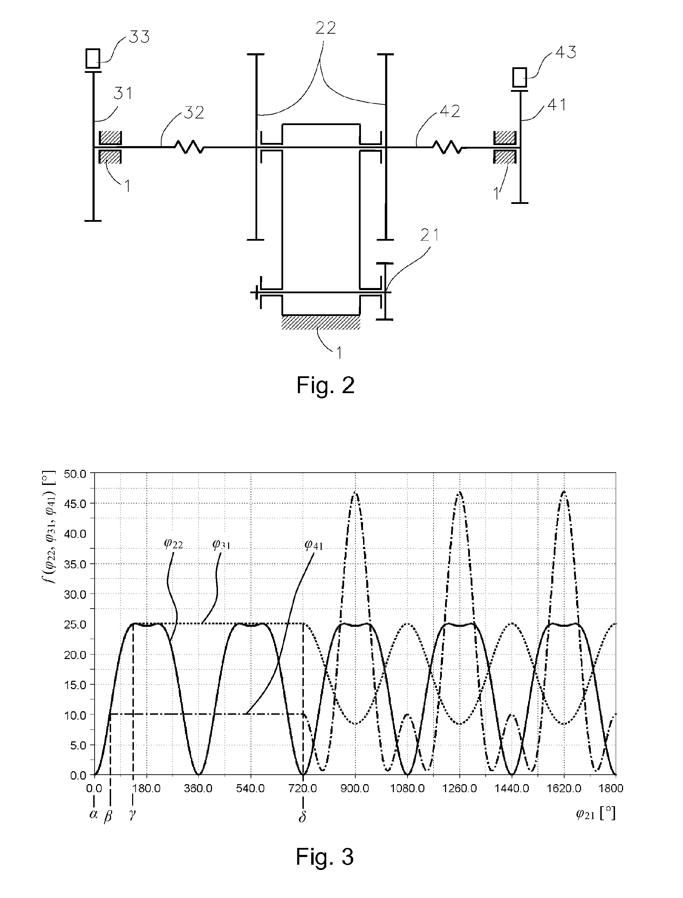

The Fig. 1 and 2 represent an exemplary embodiment of the device for start up a mechanical system according to the invention, where the mechanical system is represented by a cam mechanism.

In the frame **1** of in detailed not represented machine there is mounted the cam mechanism **2** with drive, which in exemplary embodiment is the servodrive **11,** while the driving member of the cam mechanism **2** is rotating camshaft **21,** the working member **22** is the rocking output mechanism, which here represents balanced body of mechanical system performing reversible swinging motion. The servodrive **11** of the camshaft **21** enables to rotate the working member **22** of mechanical system with respect to the frame **1.**

To the working member **22** there are linked two balancing subsystems **3, 4** always comprising one counterbalancing body **31, 41.** Each counterbalancing body **31, 41** to the shaft **23** of working member **22** is linked by means of the torsion bar **32, 42,** while the disks of counterbalancing bodies **31, 41** are in a not represented manner in the frame **1** mounted rotatably axially with the shaft **23** of the working member **22.**

In vicinity of disks of counterbalancing bodies **31, 41** on the frame **1** are arranged the retaining devices **33, 43** for immobilisation of counterbalancing bodies **31, 41** with respect to the frame **1** and sensors **34, 44** of angular position of counterbalancing bodies **31, 41** of balancing subsystems **3, 4** with respect to the frame **1.** In vicinity of the disk **24** of the working member **22** on the frame **1** is arranged the sensor **25** of angular position of working member **22** with respect to the frame **1.**

In a not represented embodiment the retaining devices **33, 43** for immobilisation of counterbalancing bodies **31, 41** with respect to the frame **1** are preferably controlled electrically, pneumatically, or hydraulically.

The drive **11** of the camshaft **21,** the sensors **25, 34, 44** of angular position and retaining devices **33, 43** of counterbalancing bodies **31, 41** are coupled with the control unit **5**.

The represented exemplary embodiment of the device according to the invention comprising two balancing subsystems **3, 4** enables to balance two harmonic components of cam stroke relationship of the cam mechanism **2.**

Determining of inertia moment **I₃₁** of the counterbalancing body **31,** determining of inertia moment of **I₄₁** of the counterbalancing body **41,** and determining of torsional rigidity **k₃₂, k₄₂** of torsion bars **32, 42** is not a subject of this invention.

Also determining of input setting of position of moving parts of the mechanical system being balanced and balancing subsystems with respect to the frame **1** given by angular displacement α, β and γ of the camshaft **21** is not a subject of this invention. At the same time the angle α corresponds to angular displacement of the working member **22,** angle β corresponds to angular displacement of the counterbalancing body **31** and the angle γ corresponds to angular displacement of the counterbalancing body **41.**

Performance of individual hereinafter described steps is controlled by means of the control unit **5.**

At the first manner of utilisation of the device according to the invention, first of all the counterbalancing bodies **31, 41** are set into respective angular positions with respect to the working member **22** of mechanical system. By means of the servodrive **11** the working member **22** is set into an initial position, which is given by beginning of system of coordinates in relationship of angular displacement **ϕ₂₂** of the working member **22** to angular displacement **ϕ₂₁** of the camshaft **21** represented in the Fig. 3 by angular displacement α = 0 of the camshaft **21.** The servodrive **11** turns the camshaft **21** in a working direction by specified angle γ, which in exemplary embodiment corresponds to the maximum cam stroke (angular displacement relationship **ϕ₂₂**). In this position the counterbalancing body **31** is immobilised with respect to the frame **1** by the retaining device **33.** Further, the servodrive **11** turns the camshaft **21** against a working direction into a position given by the specified angle β, which in the exemplary embodiment corresponds to a certain specified cam stroke (angular displacement relationship **ϕ₂₂**). In this position the counterbalancing body **41** is immobilised with respect to the frame **1** by the retaining device **43.** Further, the servodrive **11** turns the camshaft **21** against a working direction into a position given by the specified angle α. Through this the initial position of mechanical system is set, at the same time the torsion bar **32** is preloaded by angle γ and the torsion bar **42** is preloaded by angle β.

After starting the servodrive **11** of the cam mechanism **2** the working member starts to perform the reversible rotational motion (angular displacement relationship **ϕ₂₂**). The counterbalancing bodies **31, 41** are immobilised by the retaining devices **33**, **43** (angular displacement relationship **ϕ₃₁**, **ϕ₄₁**), the torsion bars **32, 42** are alternately subject to torque by angle given by the angular displacement relationship **ϕ₂₂.** Once there is achieved the required speed **ωₚ₁** close to a steady working mode of mechanical system, in a certain angular position given by the angle δ of the camshaft **21,** which in exemplary embodiment corresponds to zero stroke of the working member **22** (angular displacement relationship **ϕ₂₂**), the counterbalancing bodies **31, 41** are released by means of retaining devices **33, 43.** The counterbalancing bodies **31, 41** begin to move (angular displacement relationship **ϕ₃₁, ϕ₄₁**) and through it to balance two harmonic components of displacement relationship of the working member **22.** Practically immediately a steady working mode of mechanical system is achieved.

The described method of start up of the mechanical system enables at the required angular speed **ωₚ₁** to achieve as quickly as possible the steady working mode of mechanical system. The drop in level of balancing is usually acceptable also during increasing the angular speed **ωₚ₁** of steady working mode of mechanical system to the value **K1·Ω,** where the coefficient **K₁**≈1,2, or during decreasing the angular speed **ωₚ₁** to the value **K₂·Ω,** while the coefficient **k₂**≈0,95. On the contrary, a steady mode of mechanical system at angular speed **ωₚ₂** lower than the speed **k₂·Ω** or higher than **k₁·Ω,** at this manner of utilisation is not possible due to unbearable increasing of imbalance. Values of coefficients **k₁, k₂** are given by particular characteristics of mechanical system being balanced.

Ω is nominal angular speed of mechanical system, for which the parameters of balancing subsystems **3, 4** are designed, i.e. rigidity of elastic members and weight parameters of counterbalancing bodies **31, 41.** At this speed the best level of balancing of inertial effects of the mechanical system being balanced is achieved. Angular speed **ωₚ₁** is a working angular speed, at which the given machine performs its function. In an ideal case, this equals to the nominal angular frequency Ω. Generally, the value of angular speed **ωₚ₁** lies within an acceptable range of speeds given by the limits **k₁·Ω, k₂·Ω.**

The first manner for utilisation the device according to the invention enables to maximally accelerate the start up of the device to the speed **ωₚ₁,** because during the start up there is no motion of the counterbalancing bodies **31, 41.** This reduces demand as to output of the drive of the device, which in this phase is in addition loaded by forces from springing of the torsion bars **32, 42.**

From the point of view of negative effects of dynamic forces, the device according to the invention enables to achieve an acceptable steady operation of mechanical system even at the required angular speed **ωₚ₂,** whose value lies beyond permissible range of speeds given by the limits **k₁·Ω, k₂·Ω.** Value of the required angular speed **ωₚ₂** is then lower than the value **k₂·Ω,** or also higher than the value **k₁·Ω.**

At this second manner of utilisation of the device, without torsion bars **32, 42** being preloaded, the counterbalancing bodies **31, 41** are blocked by means of retaining devices **33, 43.** The servodrive **11** starts operation and once the angular speed **ωₚ₂** of steady operation of mechanical system is achieved, the counterbalancing bodies **31, 41** remain permanently in blocked status. In this case the ends of torsion bars **32, 42** distant from the working member **22** are permanently firmly linked with the frame **1.** After-run of the working member **22** into one or second dead centre of its reversible motion is braked by restoring force of the torsion bars **32, 42** being subject to torque, while the start up back from the dead centre is supported by force effects of torsion bars **32, 42.** This reduces demand as to drive of mechanical system and from the point of view of efficiency of generated dynamic forces the range of applicable working angular speed of mechanical system is broadened.

The device according to this invention and method of its application enables to reduce the loading of mechanical system being balanced and the value of reaction forces transmitted into the machine frame. This substantially reduces the demand as to dimensioning of such parts of the machine like e.g. bearings, ball screws and their nuts, toothed, belt and chain gears, couplings, etc.

### List of referential marking

- 1: frame (of the machine)
- 11: servodrive (of the camshaft)
- 2: cam mechanism
- 21: camshaft
- 22: working member (of cam mechanism)
- 23: shaft (of working member)
- 24: disk (of working member)
- 25: position sensor (of working member disk)
- 3: balancing subsystem
- 31: counterbalancing body
- 32: torsion bar
- 33: retaining device (of counterbalancing body)
- 34: sensor (of angular position of counterbalancing body)
- 4: balancing subsystem
- 41: counterbalancing body
- 42: torsion bar
- 43: retaining device (of counterbalancing body)
- 44: sensor (of angular position of counterbalancing body)
- 5: control unit
- I₃₁: inertia moment (of counterbalancing body 31)
- I₄₁: inertia moment (of counterbalancing body 41)
- k₁: coefficient
- k₂: coefficient
- k₃₂: torsional rigidity (of torsion bar 32)
- k₄₂: torsional rigidity (of torsion bar 42)
- α: angular displacement of camshaft
- β: angular displacement of camshaft
- γ: angular displacement of camshaft
- δ: angular displacement of camshaft
- ϕ₂₁: angular displacement relationship
- ϕ₂₂: angular displacement relationship
- ϕ₃₁: angular displacement relationship
- ϕ₄₁: angular displacement relationship
- ωₚ₁: angular speed of steady working mode of mechanical system
- ωₚ₂: angular speed of steady working mode of mechanical system
- Ω: nominal angular speed for balancing by counterbalancing bodies

## Claims

1. Method for reducing the negative effects of dynamic forces of mechanical system, whose working member (22) performs reversible periodic rotation motion, the system is provided with at least one balancing sub-system (3, 4) comprising a counterbalancing body (31, 41) linked with working member (22) of mechanical system by elastic means, **characterised in that**, the counterbalancing body (31, 41) before commencement of start up of mechanical system gets immobile with respect to the frame (1), and its releases after start up of the working member (22) of mechanical system in case of reaching the required angular speed (ωₚ₁) of steady working mode of mechanical system laying in the range of speeds permissible for balancing with counterbalancing body (31, 41) in a moment, in which the working member (22) of mechanical system is to be found in a certain specified angular position (δ) with respect to the counterbalancing body (31, 41) of mechanical system.

2. Method according to the claim 1, **characterised in that**, at operation of the device on an angular speed (ωₚ₂) of a steady working mode of mechanical system laying outside the range of speeds permissible for balancing with counterbalancing body (31, 41), the counterbalancing body (31,41) remains immobile.

3. Method according to the claim 1, **characterised in that**, before the counterbalancing body (31, 41) gets immobile, the counterbalancing body (31, 41) is set into a certain angular position (α, β) with respect to the working member (22).

4. Method according to any of the previous claims, **characterised in that**, immobilisation of the counterbalancing body (31, 41) of balancing subsystem (3, 4) with respect to the stationary frame (1) of the mechanical system, possibly its releasing from the stationary frame (1) of the mechanical system being balanced is performed by means of the retaining device (33, 43).

5. Method according to the claim 4, **characterised in that**, the retaining device (33, 43) is controlled electrically, pneumatically or hydraulically.

6. Device for reducing the negative effects of dynamic forces of the mechanical system comprising movable members coupled with at least one balancing subsystem (3, 4) comprising the counterbalancing body (31, 41) linked by an elastic means with the working member (22) of mechanical system, while the mechanical system with the balancing subsystem (3, 4) is mounted in the frame (1), **characterised in that**, the counterbalancing body (31, 41) of balancing subsystem (3, 4) is in a detachable manner attachable to the frame (1).

7. Device according to the claim 6, **characterised in that**, to the counterbalancing body (31, 41) there is assigned the retaining device (33, 43) arranged on the frame (1).

8. Device according to the claim 7, **characterised in that**, to the counterbalancing body (31, 41) there are further assigned means for setting mutual angular position of the counterbalancing body (31, 41) of balancing subsystem (3, 4) and working member (22) of mechanical system, a position sensor (25) of working member (22) of mechanical system and the control unit (5) coupled with servodrive (11) of driving member of the mechanical system being balanced, with retaining device (33, 43) for detachable linking of the counterbalancing body (31, 41) of balancing subsystem (3, 4) and frame (1), and with position sensor (25) of the working member (22) of mechanical system.
